# EUROPÄISCHE PATENTSCHRIFT

(11) **EP 3 251 479 B1**
(45) Veröffentlichungstag und Bekanntmachung des Hinweises auf die Patenterteilung: **06.03.2019**
(21) Anmeldenummer: 17169198.3
(22) Anmeldetag: 03.05.2017
(51) Int. Cl.: A01B 33/02, A01B 33/14

(54) **BODENBEARBEITUNGSMASCHINE**
SOIL PROCESSING MACHINE
MACHINE DE TRAVAIL DU SOL

(30) Priorität: 17.05.2016 DE 202016003123 U
(43) Veröffentlichungstag der Anmeldung: 06.12.2017
(73) Patentinhaber: Craco GmbH, 57629 Atzelgift (DE)
(72) Erfinder: Schönenberg, Erich, 57629 Limbach (DE)
(74) Vertreter: advotec.

(56) Entgegenhaltungen:
- EP-A2- 0 196 545
- DE-A1- 19 515 483
- DE-U1-202011 108 170
- DE-U1-202014 006 751

## Beschreibung

Die Erfindung betrifft eine Bodenbearbeitungsmaschine und ein Verfahren zur Bodenbearbeitung, insbesondere zur Bearbeitung von Wühlschäden an Böden, wobei die Bodenbearbeitungsmaschine einen Tragrahmen mit zwei daran quer zu einer Fahrtrichtung angeordneten horizontalen Rotoren und einer quer zu der Fahrtrichtung angeordneten und drehbar gelagerten horizontalen Rückverfestigungswalze sowie eine Antriebsvorrichtung umfasst, wobei die Rotoren mit der Antriebsvorrichtung gekoppelt und so antreibbar sind, dass ein in Fahrtrichtung vorderer Rotor in Richtung der Fahrtrichtung und ein in Fahrtrichtung hinterer Rotor entgegen der Fahrtrichtung rotiert.

Derartige Bodenbearbeitungsmaschinen sind hinreichend bekannt und werden zur Beseitigung von beispielsweise Wühlschäden von Schwarzwild in Grasböden eingesetzt. Mit den gegenläufigen Rotoren können aufgeworfene Grassoden zerkleinert und Löcher im Boden wieder verfüllt werden. Eine Verfestigung des aufgeworfenen Erdreichs erfolgt mit einer in Fahrtrichtung hinter den Rotoren angeordneten Walze. Auch ist es bekannt derartige Bodenbearbeitungsmaschinen zum Vertikutieren von Grasböden einzusetzen.

So ist aus der DE 20 2014 006 751 U1 ein Mulchvertikutierer mit zwei Rotoren bekannt, wobei die Rotoren sich gegenläufig drehen und mit sogenannten Vertikutierwerkzeugen und Mulchmessern bestückt sind.

Die bekannten Bodenbearbeitungsmaschinen weisen den Nachteil auf, dass insbesondere Wühlschäden nur unzureichend beseitigt werden. So können Löcher in Grasböden nur unzureichend verfüllt werden, da häufig Erdreich an der Rückverfestigungswalze anhaftet. Dieses Erdreich wird regelmäßig mittels eines Abstreifers von der Rückverfestigungswalze beseitigt, wobei das von der Rückverfestigungswalze zu entfernende Erdreich als unerwünschte Erdanhäufung oberhalb einer Grasnarbe abgelegt wird. Auch die bekannten Vertikutiermaschinen sind nicht zur Verfüllung von Löchern in Grasböden geeignet, da die Vertikutierwerkzeuge regelmäßig starr an einem Rotor befestigt sind. Die Vertikutierwerkzeuge können so leicht durch größere Steine, die sich beispielsweise in einer aufgeworfenen Grassode befinden können, beschädigt werden.

Der vorliegenden Erfindung liegt daher die Aufgabe zugrunde, eine Bodenbearbeitungsmaschine und ein Verfahren zur Bodenbearbeitung vorzuschlagen, die eine verbesserte Bearbeitung von Wühlschäden an Böden ermöglicht.

Diese Aufgabe wird durch eine Bodenbearbeitungsmaschine mit den Merkmalen des Anspruchs 1 und ein Verfahren zur Bodenbearbeitung mit den Merkmalen des Anspruchs 22 gelöst.

Die erfindungsgemäße Bodenbearbeitungsmaschine, insbesondere zur Bearbeitung von Wühlschäden an Böden, umfasst einen Tragrahmen mit zwei daran quer zu einer Fahrtrichtung angeordneten horizontalen Rotoren und einer quer zu der Fahrtrichtung angeordneten und drehbar gelagerten horizontalen Rückverfestigungswalze sowie eine Antriebsvorrichtung, wobei die Rotoren mit der Antriebsvorrichtung gekoppelt und so antreibbar sind, dass ein in Fahrtrichtung vorderer Rotor in Richtung der Fahrtrichtung und ein in Fahrtrichtung hinterer Rotor entgegen der Fahrtrichtung rotiert, wobei jeweils an den Rotoren in Fahrtrichtung schwenkbar gelagerte Schneidelemente zum Eingriff in einen Boden angeordnet sind, wobei der hintere Rotor relativ zu der Rückverfestigungswalze parallel und so dicht an der Rückverfestigungswalze derart angeordnet ist, dass an der Rückverfestigungswalze anhaftende Bodenbestandteile von den Schneidelementen beseitigt werden.

Demnach können die Rotoren gegenläufig rotieren, so dass Grassoden zerkleinert und Bodenbestandteile zwischenliegend den Rotoren angesammelt und nach oben befördert werden können. Dadurch können die Bodenbestandteile vergleichsweise gleichmäßig verteilt werden. Weiter sind die Schneidelemente an den Rotoren schwenkbar gelagert, so dass die Schneidelemente vor einer Beschädigung durch zum Beispiel Steine geschützt werden. Trifft ein Schneidelement auf einen Stein oder auf einen anderen harten Gegenstand, kann das Schneidelement aufgrund seiner schwenkbaren Lagerung zumindest teilweise ausweichen, wodurch ein Verschleiß der Schneidelemente wesentlich herabgesetzt ist. Darüber hinaus wird eine Anhaftung von aufgeworfenen Bodenbestandteilen oder Erde an der Rückverfestigungswalze dadurch verhindert, dass der hintere Rotor parallel und so dicht an der Rückverfestigungswalze angeordnet ist, dass die Schneidelemente des hinteren Rotors an der Rückverfestigungswalze eventuell anhaftende Bodenbestandteile beseitigen und gegebenenfalls zerkleinern. Es kann daher vollständig auf die Anordnung eines Abstreifers an der Rückverfestigungswalze verzichtet werden. Von der Rückverfestigungswalze können dann auch keine größeren Anhaftungen oder Klumpen aus Erdreich abfallen, die einer Einebnung des Bodens entgegenstehen.

Besonders vorteilhaft ist es, wenn die Schneidelemente unabhängig voneinander an dem Rotor gelagert sind. Dann können die Schneidelemente auch kleineren Hindernissen, wie Steinen, beim Eindringen in den Boden oder in Grassoden selbsttätig individuell ausweichen, wodurch eine Standzeit der Schneidelemente verlängert werden kann.

Das Schneidelement kann in einem Bereich von bis zu 180° um eine Achse schwenkbar an dem Rotor befestigt sein. Dann wird es möglich, die Schneidelemente vor größeren Beschädigungen zu schützen, wenn mit der Bodenbearbeitungsmaschine verhältnismäßig große Hindernisse oder Steine überfahren werden. Die Achse kann beispielsweise ein einfacher Bolzen sein, über den das Schneidelement am Rotor bzw. einer Welle des Rotors gelagert ist.

Vorteilhaft können die Schneidelemente plattenförmig ausgebildet und durch eine mittels einer Drehung der Rotoren bewirkten Zentrifugalkraft in radialer Richtung ausgerichtet werden. Eine ausreichende Zentrifugalkraft wird dann ausgebildet, wenn eine Drehzahl des Rotors erreicht wird, bei der die Zentrifugalkraft zu der radialen Ausrichtung der Schneidelemente führt. Eine weiter erhöhte Drehzahl vergrößert dann eine Zentrifugalkraft, so dass über eine Steuerung der Drehzahl der Rotoren eine Schwenkbarkeit der Schneidelemente beeinflusst werden kann. Wenn die Schneidelemente plattenförmig ausgebildet sind, können die Schneidelemente auch besonders einfach hergestellt werden. Beispielsweise können die Schneidelemente mit der gewünschten Geometrie dann einfach aus einem Metallblech ausgeschnitten werden.

Die Schneidelemente können auch schaufelförmig ausgebildet und durch eine mittels einer Drehung der Rotoren bewirkten Zentrifugalkraft in radialer Richtung ausgerichtet werden. Durch die schaufelförmige Ausbildung der Schneidelemente können diese zumindest nicht so weit in einen Boden eindringen, wie beispielsweise plattenförmig ausgebildete Schneidelemente. Dadurch wird es möglich den betreffenden Boden im Bereich einer Oberfläche zu bearbeiten ohne mit den schaufelförmigen Schneidelementen tief in den Boden einzudringen. Insbesondere größere Wurzeln im Bereich der Oberfläche können dann vorteilhaft zerkleinert werden. Die Bodenbearbeitungsmaschine kann dann auch beispielsweise zur Nachbearbeitung von Feldern, insbesondere Maisfeldern oder dergleichen, eingesetzt werden.

Nach einer vorteilhaften Ausführungsform kann der vordere Rotor schaufelförmige Schneidelemente und der hintere Rotor plattenförmige Schneidelemente aufweisen. Prinzipiell ist es jedoch auch möglich, dass der hintere Rotor schaufelförmige Schneidelemente und der vordere Rotor plattenförmige Schneidelemente aufweist, oder die Rotoren alleine schaufelförmige oder alleine plattenförmige Schneidelemente aufweisen. Wenn der vordere Rotor schaufelförmige Schneidelemente aufweist, kann zunächst eine Bearbeitung einer Oberfläche eines Bodens erfolgen, bevor eine tiefergehende Bearbeitung des Bodens beziehungsweise ein Auflockern des Bodens mit plattenförmigen Schneidelementen erfolgt.

Die Schneidelemente können von der Rückverfestigungswalze 0,5 cm bis 5 cm bevorzugt 0,5 cm bis 2 cm beabstandet sein. Das hier angegebene Abstandsmaß bezieht sich auf ein in radialer Richtung des hinteren Rotors auf einen Mittelpunkt der Rückverfestigungswalze ausgerichtetes Schneidelement. Bei dem angegebenen Abstandsmaß wird es leicht möglich, eventuell an der Rückverfestigungswalze anhaftendes Erdreich mit den Schneidelementen von der Rückverfestigungswalze abzulösen bzw. zu entfernen. Dabei muss noch nicht einmal die gesamte Oberfläche der Rückverfestigungswalze von rotierenden Schneidelementen bestrichen werden, da von der Rückverfestigungswalze abgeschlagenes Erdreich auch benachbartes, anhaftendes Erdreich leicht mitreißen und ebenfalls von der Rückverfestigungswalze entfernen kann.

In einer vorteilhaften Ausführungsform können die Schneidelemente am Umfang des Rotors in axialer Richtung in Reihen angeordnet sein. Dadurch wird es möglich, den Boden so zu bearbeiten, dass durch die Reihen von Schneidelementen Schlitze in den Boden eingearbeitet werden. Dabei kann eventuell am Boden vorhandenes Moos entfernt und der Boden belüftet werden. Folglich ist dann mit der Bodenbearbeitungsmaschine ein Vertikutieren von Grasböden möglich. Die Anordnung der Schneidelemente in Reihen am Rotor kann dadurch realisiert werden, dass an dem Rotor umlaufende Scheiben, Platten, Flachstähle oder Scheiben, die in Art eines Ritzels ausgebildet sind, zur Befestigung der Schneidelemente angeordnet sind. An den Scheiben, Platten oder Flachstählen können dann jeweils axiale Bohrungen vorgesehen sein, an denen die Schneidelemente schwenkbar befestigt werden können.

Die Schneidelemente können am Umfang des Rotors in axialer und radialer Richtung zueinander versetzt in einer Reihe angeordnet sein. Beispielsweise können die Schneidelemente an dem Umfang des Rotors wendelförmig angeordnet sein. So kann unter anderem ein gleichmäßiger Umlauf beziehungsweise eine Rotation des Rotors verbessert werden.

Je Reihe können zumindest zwei bis fünf, bevorzugt sechs bis zwölf besonders bevorzugt acht Schneidelemente am Umfang des Rotors angeordnet sein. Auch kann der Rotor so ausgebildet sein, dass die Schneidelemente wahlweise am Rotor angeordnet werden können, so dass je nach Bodenbeschaffenheit der Rotor mit mehr oder weniger Schneidelementen bestückt werden kann. Weiter können die Schneidelemente über den Umfang des Rotors äquidistant voneinander beabstandet sein.

Das Schneidelement kann aus einem Gusswerkstoff, einem feinkörnigen Baustahl oder aus Keramik bestehen, wobei das Schneidelement eine Härte von 350 bis 550 Brinell (HB) aufweisen kann. Vorzugsweise kann das Schneidelement auch eine Härte von 430 bis 550 Brinell aufweisen. Die Härte des Schneidelements bzw. der Werkstoffe kann so ausgewählt werden, dass das Schneidelement der jeweiligen Bodenbeschaffenheit und Bearbeitungsaufgabe angepasst ist.

Die Schneidelemente des vorderen Rotors können von den Schneidelementen des hinteren Rotors in Fahrtrichtung beabstandet sein. Demnach kann der vordere Rotor von dem hinteren Rotor so weit beabstandet sein, dass ein Spalt zwischen dem vorderen Rotor und dem hinteren Rotor auch bei radial von den Rotoren abstehenden Schneidelementen ausgebildet ist. Dadurch kann verhindert werden, dass die Schneidelemente miteinander kollidieren und dass zwischen die Rotoren eingezogene Grassoden zu stark zerkleinert werden. So ist es von Vorteil, wenn die Wurzeln einer Grasnarbe nicht durch starke Zerkleinerung zerstört werden, so dass im Bereich von verfüllten Löchern bzw. Unebenheiten eines Grasbodens ein selbsttätiges Wachstum der Grasnarbe erfolgen kann.

Die Rückverfestigungswalze kann eine Stabwalze sein. Eine Stabwalze ist besonders einfach und kostengünstig herstellbar, wobei auch mittels der Stabwalze eine unerwünschte dichte Rückverfestigung verhindert werden kann. Zuvor abgefräste Bodenbestandteile können mittels der Stabwalze vorteilhaft in Unebenheiten verfüllt werden. Da eine Stabwalze gegenüber einer rohrförmigen, geschlossenen Walze eine vergleichsweise kleine Oberfläche bzw. Auflagefläche auf dem Boden aufweist, ist die Bodenbearbeitungsmaschine auch unempfindlich gegenüber Regen und Nässe, da die Stabwalze bei feuchten Böden nicht zuschmieren kann und Bodenbestandteile nur schlecht an Stäben der Stabwalze anhaften können.

Die Stabwalze kann aus in axialer Richtung der Stabwalze wendelförmig angeordneten und parallel beabstandeten Stäben ausgebildet sein. Beispielsweise kann die Stabwalze in Fahrtrichtung ausgerichtete Scheiben aufweisen, an denen die Stäbe durch Schweißen einfach befestigt werden können. Durch die wendelförmige Anordnung der Stäbe kann die Stabwalze gut auf dem Boden abrollen und wird auf sandigen und lockeren Böden nicht wesentlich eingedrückt. Wenn die Stabwalze dennoch in den Boden eingedrückt wird, kann sie gleichmäßig abrollen. Zwischenräume der parallelen Stäbe können so bemessen sein, dass Bodenbestandteile in die Stabwalze hinein und auch wieder heraus gelangen können. Prinzipiell kann die Stabwalze bzw. deren Innenraum während eines Betriebs auch mit Erdreich verfüllt bzw. zugesetzt sein. Dennoch wird ein Boden dann nicht zu stark oder ungleichmäßig verdichtet, da regelmäßig an einer mit Erdreich zugesetzten Stabwalze kein weiteres Erdreich bzw. weitere Bodenbestandteile anhaften können.

Die Stabwalze kann eine Achse aufweisen, deren Achsdurchmesser um den Faktor 0,5 bis 0,8 kleiner ist als ein Außendurchmesser der Stabwalze. Die Achse der Stabwalze kann demnach hinsichtlich ihres Achsdurchmessers dem Außendurchmesser der Stabwalze angenähert sein, wodurch ein ggf. erwünschtes Zusetzen der Stabwalze mit Erdreich bzw. Bodenbestandteilen begünstigt werden kann. Die Achse kann ein hohles Rohr, eine durchgehende, geschlossene Achse oder auch eine nicht durchgehende Achse mit einem Wellenstummel jeweils an Enden der Stabwalze sein.

Die Bodenbearbeitungsmaschine kann in einer weiteren Ausführungsform eine Sävorrichtung zum Ausbringen von Saatgut aufweisen. Die Sävorrichtung kann eine pneumatische Sävorrichtung sein, so dass über die Bodenbearbeitungsmaschine in Art einer Sämaschine Saatgut auf den bearbeiteten Boden ausgebracht werden kann. Dadurch kann beispielsweise ein Nachwachsen von Gras bei mit der Bodenbearbeitungsmaschine eingeebneten Wühlschäden in einem Grasboden unterstützt werden.

Die Sävorrichtung kann Saatgutabgabeeinrichtungen aufweisen, die zwischen der Rückverfestigungswalze und dem hinteren Rotor und/oder oberhalb der Rückverfestigungswalze angeordnet sein können. Die Saatgutabgabeeinrichtungen können beispielsweise Säschare sein, die nicht in einen Boden eindringen müssen, sondern lediglich eine möglichst gleichmäßige Abgabe von Saatgut über eine Bearbeitungsbreite der Bodenbearbeitungsmaschine sicherstellen können. Durch die Anordnung der Saatgutabgabeeinrichtungen im Bereich der Rückverfestigungswalze wird es möglich, das Saatgut zusammen mit den Bodenbestandteilen anzudrücken bzw. zu verfestigen. Die Saatgutabgabeeinrichtungen können Schläuche sein, die mit einem pneumatischen Verteilkopf der Sävorrichtung verbunden und mit Abgabeöffnungen über der Rückverfestigungswalze angeordnet sind.

An dem Tragrahmen können Befestigungseinrichtungen zur Befestigung der Bodenbearbeitungsmaschine an einem Schlepper ausgebildet sein, wobei die Antriebsvorrichtung über eine Antriebswelle des Schleppers mit dem Schlepper koppelbar sein kann. Die Antriebsvorrichtung kann eine Geräteschutztopf zum Anschluss einer Antriebswelle oder eine Zapfwelle umfassen, mit der über ein Getriebe die Rotoren angetrieben werden können. Dabei kann vorgesehen sein, dass die Rotoren mit übereinstimmender oder voneinander abweichender Drehzahl aufgrund einer jeweiligen Getriebeübersetzung betrieben werden. Auch kann die Bodenbearbeitungsmaschine so an dem Schlepper angeordnet sein, dass auch bei einer Rückwärtsfahrt des Schleppers eine Bodenbearbeitung mittels der Bodenbearbeitungsmaschine möglich ist.

Die Antriebsvorrichtung kann eine Leistungsbegrenzungseinrichtung aufweisen, mittels der ein auf die Rotoren übertragbares Drehmoment und/oder eine Drehzahl begrenzbar ist. So kann verhindert werden, dass ein Grasboden durch eine übermäßige Drehzahl der Rotoren zerstört wird, oder dass es zu einer Beschädigung der Schneidelemente bzw. der Rotoren bei einem Überfahren von Hindernissen kommt. Die Bodenbearbeitungsmaschine kann dann auch einfach universell an Schleppern mit unterschiedlichsten Leistungscharakteristika eingesetzt werden. Alternativ kann die Leistungsbegrenzungseinrichtung an einem Schlepper ausgebildet sein.

Mittels der Antriebsvorrichtung können die Rotoren mit einer Drehzahl von 800 bis 1200 min⁻¹, bevorzugt 1000 min⁻¹ drehbar sein. Diese Drehzahl hat sich als vorteilhaft für die Bearbeitung von Wühlschäden an Böden erwiesen.

An dem Tragrahmen kann eine Rotorabdeckung ausgebildet sein, wobei die Rotorabdeckung in einer in Fahrtrichtung vorderen und/oder hinteren Ecke eines Innenraums jeweils ein Leitblech zur Führung von Bodenbestandteilen aufweisen kann. Mittels der Rotorabdeckung kann verhindert werden, dass Bodenbestandteile in unerwünschter Weise herumgeschleudert werden und es gegebenenfalls zur Verletzung von Personen kommt. Auch können von dem Boden abgelöste Bodenbestandteile in dem Innenraum zurückgehalten und wieder auf den Boden abgelegt werden. Die von den Rotoren mitgerissenen Bodenbestandteile können durch die Leitbleche vorteilhaft in Art eines im Innenraum ausgebildeten Materialstroms wieder auf den Boden zurückgeführt werden.

Die vorstehend beschriebene Bodenbearbeitungsmaschine kann insbesondere zur Bearbeitung von Wühlschäden an Böden verwendet werden.

Bei dem erfindungsgemäßen Verfahren zur Bodenbearbeitung, insbesondere zur Bearbeitung von Wühlschäden an Böden, mit einer Bodenbearbeitungsmaschine, umfasst die Bodenbearbeitungsmaschine einen Tragrahmen mit zwei daran quer zu einer Fahrtrichtung angeordneten horizontalen Rotoren und einer quer zu der Fahrtrichtung angeordneten und drehbar gelagerten horizontalen Rückverfestigungswalze sowie eine Antriebsvorrichtung, wobei die Rotoren mit der Antriebsvorrichtung gekoppelt und so angetrieben werden, dass ein in Fahrtrichtung vorderer Rotor in Richtung der Fahrtrichtung und ein in Fahrtrichtung hinterer Rotor entgegen der Fahrtrichtung rotiert, wobei jeweils an den Rotoren in Fahrtrichtung schwenkbar gelagerte Schneidelemente zum Eingriff in einen Boden angeordnet sind, wobei an der Rückverfestigungswalze anhaftende Bodenbestandteile von den Schneidelementen des hinteren Rotors beseitigt werden. Hinsichtlich der Vorteile des erfindungsgemäßen Verfahrens wird auf die Vorteilsbeschreibung der erfindungsgemäßen Bodenbearbeitungsmaschine verwiesen.

Weitere Ausführungsformen des Verfahrens ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine perspektivische Ansicht einer ersten Ausführungsform einer Bodenbearbeitungsmaschine mit einer Sävorrichtung;
- **Fig. 2**: eine perspektivische Ansicht einer zweiten Ausführungsform einer Bodenbearbeitungsmaschine;
- **Fig. 3**: eine Querschnittansicht der Bodenbearbeitungsmaschine aus **Fig. 2****;**
- **Fig. 4**: eine perspektivische Ansicht einer Rückverfestigungswalze;
- **Fig. 5**: eine Vorderansicht der Bodenbearbeitungsmaschine;
- **Fig. 6**: eine Querschnittsansicht einer dritten Ausführungsform einer Bodenbearbeitungsmaschine;
- **Fig. 7**: eine perspektivische Unteransicht der Bodenbearbeitungsmaschine aus **Fig. 6****;**
- **Fig. 8**: eine perspektivische Ansicht eines Rotors.

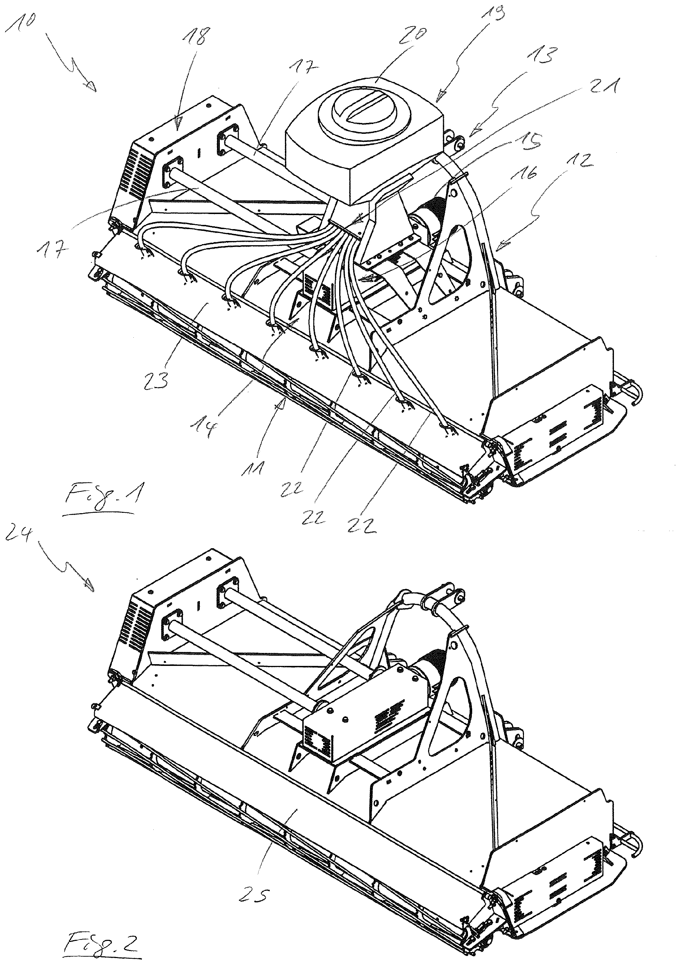

Die **Fig. 1** zeigt eine perspektivische Ansicht einer Bodenbearbeitungsmaschine 10, die an einem hier nicht dargestellten Schlepper befestigt und zur Bearbeitung von Wühlschäden an Böden genutzt werden kann. Die Bodenbearbeitungsmaschine 10 verfügt über zwei hier nicht dargestellte Rotoren und eine Rückverfestigungswalze 11, die an einem Tragrahmen 12 angeordnet sind. Der Tragrahmen 12 umfasst eine Befestigungseinrichtung 13 zur Befestigung der Bodenbearbeitungsmaschine 10 an einem Schlepper. An dem Tragrahmen 12 ist weiter eine Antriebsvorrichtung 14 angeordnet, die einen Geräteschutztopf 15 zur Verbindung mit einer Antriebswelle des Schleppers umfasst. Nachfolgend dem Geräteschutztopf 15 ist ein erstes Getriebe 16 der Antriebsvorrichtung 14 an dem Tragrahmen 12 angeordnet, von dem zwei Wellen 17 zu einem zweiten Getriebe 18 zum unmittelbaren Antrieb der Rotoren führen. Auf dem Tragrahmen 12 ist darüber hinaus eine pneumatische Sävorrichtung 19 mit einem Saatgutbehälter 20 und einem Verteilkopf 21 befestigt. Über Schläuche 22 kann so Saatgut in einem Bereich der Rückverfestigungswalze 11 abgegeben werden, wobei die Schläuche 22 durch eine Schutzabdeckung 23 der Rückverfestigungswalze 11 hindurchgeführt sind.

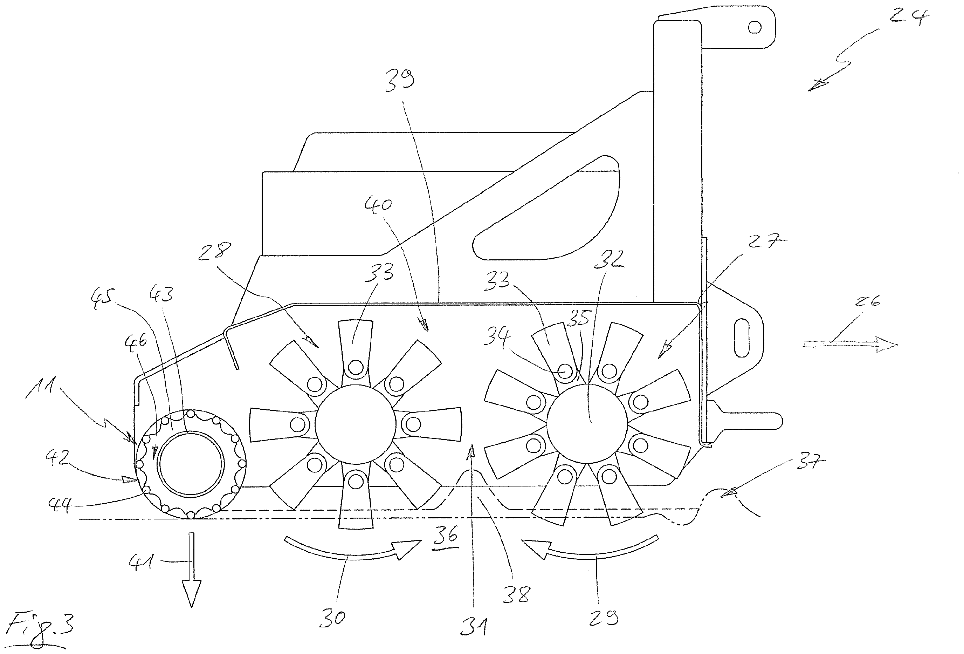

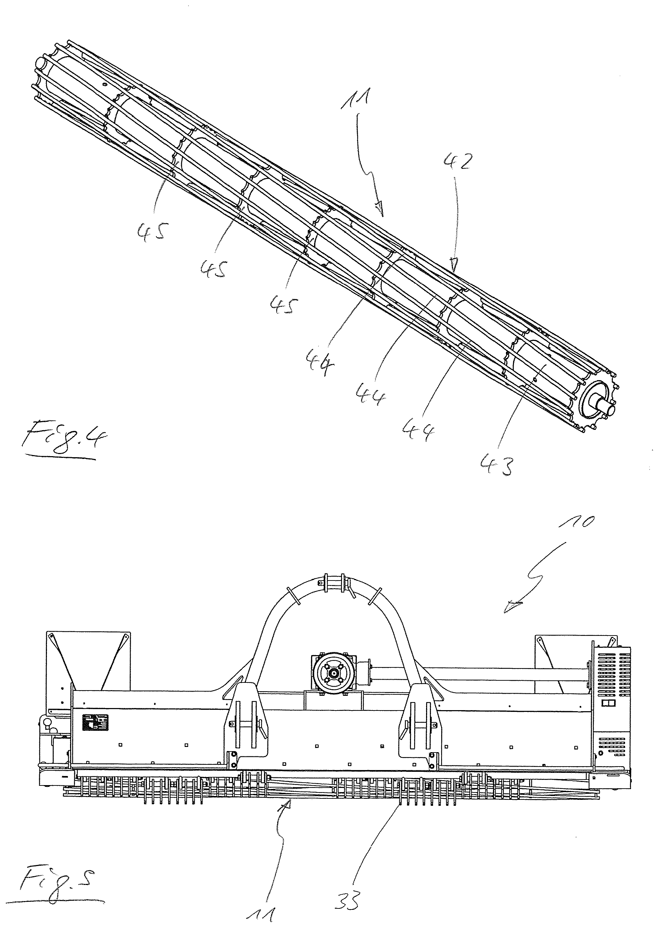

Eine Zusammenschau der **Fig. 2** bis **4** zeigt eine weitere Ausführungsform einer Bodenbearbeitungsmaschine 24, die im Unterschied zur Bodenbearbeitungsmaschine aus **Fig. 1** keine Sävorrichtung aufweist. Bei der Bodenbearbeitungsmaschine 24 ist daher eine Schutzabdeckung 25 nicht zur Halterung und Durchführung von Schläuchen ausgebildet. Die Bodenbearbeitungsmaschine 24 weist bezogen auf eine mit einem Pfeil 26 gekennzeichnete Fahrtrichtung einen vorderen Rotor 27 und einen hinteren Rotor 28 auf. Der vordere Rotor 27 dreht sich, wie mit einem Pfeil 29 gekennzeichnet, in Richtung der Fahrtrichtung und der hintere Rotor 28 dreht sich, wie mit einem Pfeil 30 gekennzeichnet, entgegen der Fahrtrichtung. Der vordere Rotor 27 ist relativ zum hinteren Rotor 28 so von diesem beabstandet, dass ein Spalt 31 zwischen den Rotoren 27 bzw. 28 ausgebildet ist. Die Rotoren 27 und 28 weisen jeweils eine Welle 32 mit daran befestigten, plattenförmigen Schneidelementen 33 auf. Die Schneidelemente 33 sind mittels einer Achse 34 an Haltern 35, die sternförmig um einen Umfang der Welle 32 angeordnet sind, schwenkbar befestigt und richten sich bei einer ausreichenden Drehzahl der Welle 32 aufgrund einer bewirkten Zentrifugalkraft in radialer Richtung relativ bezogen auf die Welle 32 wie hier dargestellt aus. Die Schneidelemente 33 greifen in einen Boden 36 ein und beseitigen Bodenunebenheiten 37 derart, dass diese in Bodenbestandteile 38 zerteilt und in den Spalt 31 gefördert werden. Durch die Rotation des vorderen Rotors 27 und des hinteren Rotors 28 werden die Bodenbestandteile 38 in Richtung einer oberen Rotorabdeckung 39 gefördert und innerhalb eines Innenraums 40 der Rotorabdeckung 39 verteilt, wobei die Bodenbestandteile 38 im Wesentlichen gleichmäßig auf dem Boden 36 herabfallen.

In Fahrtrichtung hinter dem hinteren Rotor 29 ist die Rückverfestigungswalze 11 angeordnet, wobei mittels einer hier durch einen Pfeil 41 gekennzeichneten Andruckkraft der Rückverfestigungswalze 11 die Bodenbestandteile 38 wieder an den Boden 36 angedrückt bzw. verdichtet werden. Die Rückverfestigungswalze 11 ist als eine Stabwalze 42 mit einer geschlossenen Achse 43 und wendelförmig angeordneten, parallel beabstandeten Stäben 44 ausgebildet. Die Stäbe 44 sind an Scheiben 45 auf der Achse 43 befestigt. Die Bodenbestandteile 38 können sich in einem Innenraum 46 der Stabwalze 42 ansammeln und diesen verfüllen, so dass weiterhin kaum Bodenbestandteile 38 an der Stabwalze 42 anhaften können. Weiter ist die Stabwalze 42 relativ zu dem hinteren Rotor 28 so angeordnet, dass eventuell an der Stabwalze 42 anhaftende Bodenbestandteile 38 von den Schneidelementen 33 beseitigt werden. Die Schneidelemente 33 überstreichen bei einer Rotation die Stabwalze 42 so dicht, dass anhaftende Bodenbestandteile 38 von der Stabwalze 42 abgeschlagen bzw. mitgerissen werden.

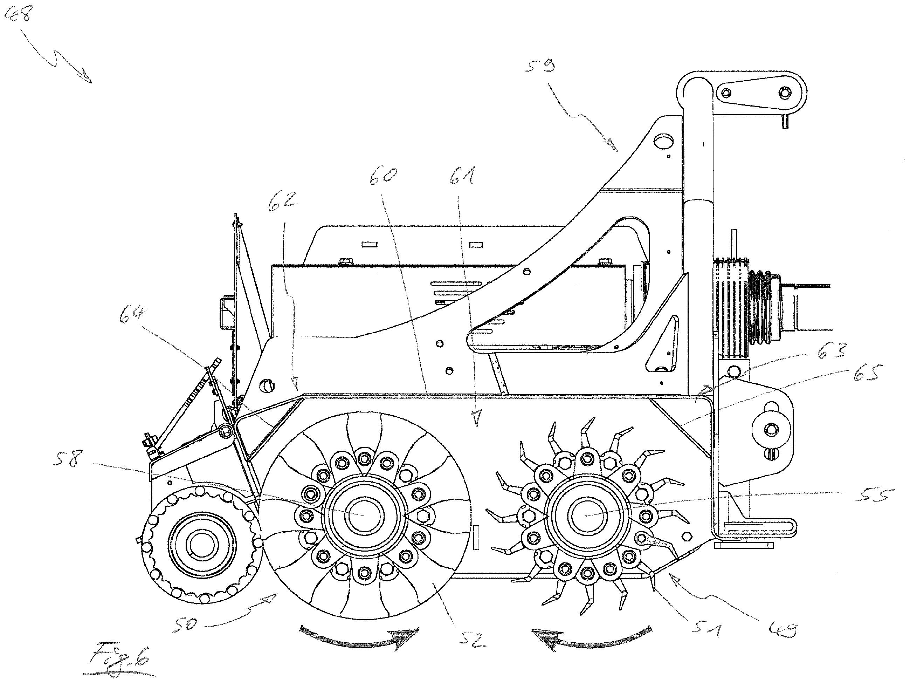

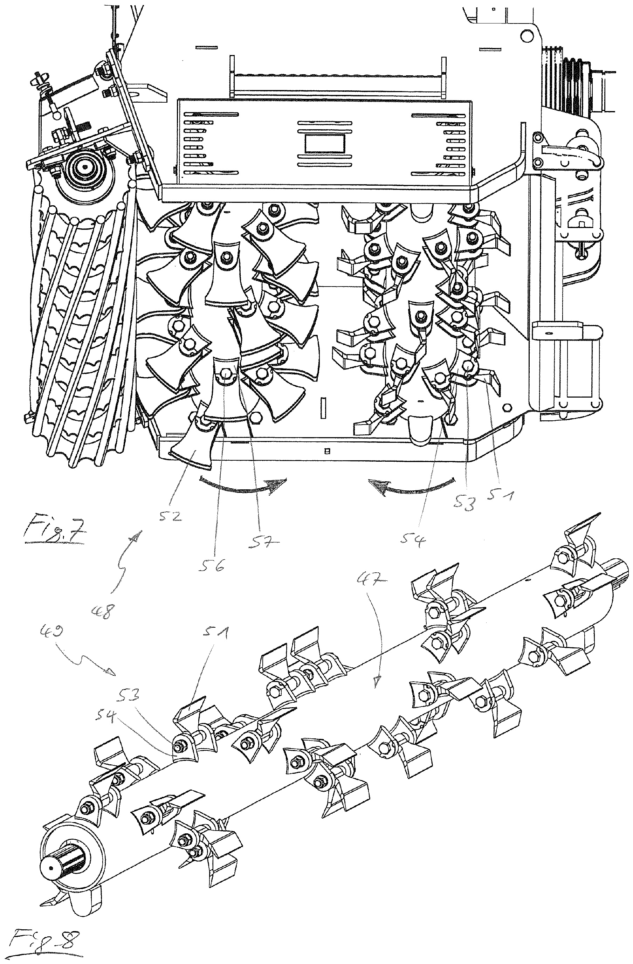

Eine Zusammenschau der **Fig. 6** bis **8** zeigt eine weitere Ausführungsform einer Bodenbearbeitungsmaschine 48, die im Unterschied zur Bodenbearbeitungsmaschine aus **Fig. 2** im Wesentlichen zwei unterschiedliche Rotoren 49 und 50 aufweist. Der vordere Rotor 49 und der hintere Rotor 50 rotieren auch hier gegenläufig, wobei der vordere Rotor 49 mit schaufelförmigen Schneidelementen 51 und der hintere Rotor 50 mit plattenförmigen Schneidelementen 52 ausgestattet sind. Die Schneidelemente 51 sind mittels einer Achse 53 an Haltern 54, die wendelförmig um einen Umfang einer Welle 55 des vorderen Rotors 49 angeordnet sind, schwenkbar befestigt und richten sich bei einer ausreichenden Drehzahl der Welle 55 aufgrund einer bewirkten Zentrifugalkraft in radialer Richtung relativ bezogen auf die Welle 55 wie hier dargestellt aus. Auch bei dem hinteren Rotor 50 sind die plattenförmigen Schneidelemente 52 an jeweils Achsen 56 mit Haltern 57 derart schwenkbar angeordnet und sind relativ zueinander auf einer Welle 58 des hinteren Rotors 50 einzeln und voneinander beabstandet wendelförmig angeordnet.

Ein Tragrahmen 59 der Bodenbearbeitungsmaschine 48 weist eine Rotorabdeckung 60 auf, die einen Innenraum 61 ausbildet, innerhalb dem die Rotoren 49 und 50 im Wesentlichen angeordnet sind. In dem Innenraum 61 sind an der Rotorabdeckung 60 in Ecken 62 und 63 jeweils Leitbleche 64 beziehungsweise 65 angeordnet. Die Leitbleche 64 und 65 verstärken den Tragrahmen 59 wesentlich und ermöglichen eine Förderung von hier nicht dargestellten Bodenbestandteilen zurück auf einen hier ebenfalls nicht dargestellten Boden.

## Patentansprüche

1. Bodenbearbeitungsmaschine (10, 24, 48), insbesondere zur Bearbeitung von Wühlschäden an Böden, wobei die Bodenbearbeitungsmaschine einen Tragrahmen (12, 59) mit zwei daran quer zu einer Fahrtrichtung (26) angeordneten horizontalen Rotoren (27, 28, 49, 50) und einer quer zu der Fahrtrichtung angeordneten und drehbar gelagerten horizontalen Rückverfestigungswalze (11) sowie eine Antriebsvorrichtung (14) umfasst, wobei die Rotoren mit der Antriebsvorrichtung gekoppelt und so antreibbar sind, dass ein in Fahrtrichtung vorderer Rotor (27, 49) in Richtung der Fahrtrichtung und ein in Fahrtrichtung hinterer Rotor (28, 50) entgegen der Fahrtrichtung rotiert,
**dadurch gekennzeichnet,**
**dass** jeweils an den Rotoren in Fahrtrichtung schwenkbar gelagerte Schneidelemente (33, 51, 52) zum Eingriff in einen Boden (36) angeordnet sind, wobei der hintere Rotor relativ zu der Rückverfestigungswalze parallel und so dicht an der Rückverfestigungswalze derart angeordnet ist, dass an der Rückverfestigungswalze anhaftende Bodenbestandteile (38) von den Schneidelementen beseitigt werden.

2. Bodenbearbeitungsmaschine nach Anspruch 1,
**dadurch gekennzeichnet,**
**dass** die Schneidelemente (33, 51, 52) unabhängig voneinander an dem Rotor (27, 28, 49, 50) gelagert sind.

3. Bodenbearbeitungsmaschine nach Anspruch 1 oder 2,
**dadurch gekennzeichnet,**
**dass** das Schneidelement (33, 51, 52) in einem Bereich von bis zu 180° um eine Achse (34, 53, 56) schwenkbar an dem Rotor (27, 28, 49, 50) befestigt ist.

4. Bodenbearbeitungsmaschine nach einem der vorangehenden Ansprüchen,
**dadurch gekennzeichnet,**
**dass** die Schneidelemente (33, 52) plattenförmig ausgebildet und durch eine mittels einer Drehung der Rotoren (27, 28, 50) bewirkten Zentrifugalkraft in radialer Richtung ausgerichtet sind.

5. Bodenbearbeitungsmaschine nach einem der vorangehenden Ansprüchen,
**dadurch gekennzeichnet,**
**dass** die Schneidelemente (51) schaufelförmig ausgebildet und durch eine mittels einer Drehung der Rotoren (49) bewirkten Zentrifugalkraft in radialer Richtung ausgerichtet sind.

6. Bodenbearbeitungsmaschine nach einem der vorangehenden Ansprüchen,
**dadurch gekennzeichnet,**
**dass** der vordere Rotor (49) schaufelförmige Schneidelemente (51) und der hintere Rotor (28, 50) plattenförmige Schneidelemente (33, 52) aufweist.

7. Bodenbearbeitungsmaschine nach einem der vorangehenden Ansprüchen,
**dadurch gekennzeichnet,**
**dass** die Schneidelemente (33, 51, 52) von der Rückverfestigungswalze (11) 0,5 cm bis 5 cm, bevorzugt 0,5 cm bis 2 cm beabstandet sind.

8. Bodenbearbeitungsmaschine nach einem der vorangehenden Ansprüchen,
**dadurch gekennzeichnet,**
**dass** die Schneidelemente (33, 51, 52) am Umfang des Rotors (27, 28, 49, 50) in axialer Richtung in Reihen angeordnet sind.

9. Bodenbearbeitungsmaschine nach einem der Ansprüche 1 bis 7,
**dadurch gekennzeichnet,**
**dass** die Schneidelemente (33, 51, 52) am Umfang des Rotors (27, 28, 51, 52) in axialer und radialer Richtung zueinander versetzt in einer Reihe angeordnet sind.

10. Bodenbearbeitungsmaschine nach Anspruch 8 oder 9,
**dadurch gekennzeichnet,**
**dass** je Reihe zumindest 2 bis 5, bevorzugt 6 bis 12, besonders bevorzugt 8 Schneidelemente (33, 51, 52) am Umfang des Rotors (27, 28, 51, 52) angeordnet sind.

11. Bodenbearbeitungsmaschine nach einem der vorangehenden Ansprüchen,
**dadurch gekennzeichnet,**
**dass** das Schneidelement (33, 51, 52) aus einem Guss-Werkstoff, einem feinkörnigen Baustahl oder aus Keramik besteht, wobei das Schneidelement eine Härte von 350 bis 550 Brinell (HB) aufweist.

12. Bodenbearbeitungsmaschine nach einem der vorangehenden Ansprüchen,
**dadurch gekennzeichnet,**
**dass** die Schneidelemente (33, 51) des vorderen Rotors (27, 49) von den Schneidelementen (33, 52) des hinteren Rotors (28, 50) in Fahrtrichtung (26) beabstandet sind.

13. Bodenbearbeitungsmaschine nach einem der vorangehenden Ansprüchen,
**dadurch gekennzeichnet,**
**dass** die Rückverfestigungswalze (11) eine Stabwalze (42) ist.

14. Bodenbearbeitungsmaschine nach Anspruch 13,
**dadurch gekennzeichnet,**
**dass** die Stabwalze (42) aus in axialer Richtung der Stabwalze wendelförmig angeordneten und parallel beabstandeten Stäben (44) ausgebildet ist.

15. Bodenbearbeitungsmaschine nach Anspruch 13 oder 14,
**dadurch gekennzeichnet,**
**dass** die Stabwalze (42) eine Achse (43) aufweist, deren Achsdurchmesser um den Faktor 0,5 bis 0,8 kleiner ist als ein Außendurchmesser der Stabwalze.

16. Bodenbearbeitungsmaschine nach einem der vorangehenden Ansprüchen,
**dadurch gekennzeichnet,**
**dass** die Bodenbearbeitungsmaschine (10, 48) eine Sävorrichtung (19) zum Ausbringen von Saatgut aufweist.

17. Bodenbearbeitungsmaschine nach Anspruch 16,
**dadurch gekennzeichnet,**
**dass** Saatgutabgabeeinrichtungen (22) der Sävorrichtung (19) zwischen der Rückverfestigungswalze (11) und dem hinteren Rotor (28, 50) und/oder oberhalb der Rückverfestigungswalze angeordnet sind.

18. Bodenbearbeitungsmaschine nach einem der vorangehenden Ansprüchen,
**dadurch gekennzeichnet,**
**dass** an dem Tragrahmen (12, 59) Befestigungseinrichtungen (13) zur Befestigung der Bodenbearbeitungsmaschine (10, 24, 48) an einem Schlepper ausgebildet sind, wobei die Antriebsvorrichtung (14) über eine Antriebswelle des Schleppers mit dem Schlepper koppelbar ist.

19. Bodenbearbeitungsmaschine nach einem der vorangehenden Ansprüchen,
**dadurch gekennzeichnet,**
**dass** die Antriebsvorrichtung (14) eine Leistungsbegrenzungseinrichtung aufweist, mittels der ein auf die Rotoren (27, 28, 49, 50) übertragbares Drehmoment und/oder eine Drehzahl begrenzbar ist.

20. Bodenbearbeitungsmaschine nach einem der vorangehenden Ansprüchen,
**dadurch gekennzeichnet,**
**dass** mittels der Antriebsvorrichtung (14) die Rotoren (27, 28, 49, 50) mit einer Drehzahl von 800 bis 1200 min⁻¹, bevorzugt 1000 min⁻¹ drehbar sind.

21. Bodenbearbeitungsmaschine nach einem der vorangehenden Ansprüchen,
**dadurch gekennzeichnet,**
**dass** an dem Tragrahmen (12, 59) eine Rotorabdeckung (39, 60) ausgebildet ist, wobei die Rotorabdeckung in einer in Fahrtrichtung (26) vorderen und/oder hinteren Ecke eines Innenraums (46, 61) jeweils ein Leitblech zur Führung von Bodenbestandteilen (38) aufweist.

22. Verfahren zur Bodenbearbeitung, insbesondere zur Bearbeitung von Wühlschäden an Böden, mit einer Bodenbearbeitungsmaschine (10, 24, 48), wobei die Bodenbearbeitungsmaschine einen Tragrahmen (12, 59) mit zwei daran quer zu einer Fahrtrichtung (26) angeordneten horizontalen Rotoren (27, 28, 49, 50) und einer quer zu der Fahrtrichtung angeordneten und drehbar gelagerten horizontalen Rückverfestigungswalze (11) sowie eine Antriebsvorrichtung (14) umfasst, wobei die Rotoren mit der Antriebsvorrichtung gekoppelt und so angetrieben werden, dass ein in Fahrtrichtung vorderer Rotor (27, 49) in Richtung der Fahrtrichtung und ein in Fahrtrichtung hinterer Rotor (28, 50) entgegen der Fahrtrichtung rotiert,
**dadurch gekennzeichnet,**
**dass** jeweils an den Rotoren in Fahrtrichtung schwenkbar gelagerte Schneidelemente (33, 51, 52) zum Eingriff in einen Boden (36) angeordnet sind, wobei an der Rückverfestigungswalze anhaftende Bodenbestandteile (38) von den Schneidelementen des hinteren Rotors beseitigt werden.

## Claims

1. A soil cultivation machine (10, 24, 48), in particular for treating grubbing damage caused to soils by animals, said soil cultivation machine comprising a support frame (12, 59) having two horizontal rotors (27, 28, 49, 50) that are arranged at said support frame at right angles to a direction of travel (26) and having a reconsolidation roll (11) that is arranged at right angles to the direction of travel and that is mounted so as to be rotatable, and said soil cultivation machine comprising a drive device (14), said rotors being coupled to the drive device and being able to be driven in such a way that a front rotor (27, 49), in the direction of travel, rotates in the direction of travel and a rear rotor (28, 50), in the direction of travel, rotates against the direction of travel,
**characterised in that**
cutting elements (33, 51, 52) for engagement with a soil (36) that are mounted so as to be pivotable in the direction of travel are arranged at the rotors, said rear rotor being arranged so as to be parallel to the reconsolidation roll and closely enough to the reconsolidation roll that soil parts (38) that adhere to the reconsolidation roll are removed by the cutting elements.

2. The soil cultivation machine according to claim 1,
**characterised in that**
the cutting elements (33, 51, 52) are mounted at the rotor (27, 28, 49, 50) independently of each other.

3. The soil cultivation machine according to claim 1 or 2, **characterised in that**
the cutting element (33, 51, 52) is fixed to the rotor (27, 28, 49, 50) so as to be pivotable in a range of up to 180° around an axis (34, 53, 56).

4. The soil cultivation machine according to any one of the preceding claims,
**characterised in that**
the cutting elements (33, 52) are realised so as to be plate-shaped and are aligned in the radial direction by means of a centrifugal force that is produced by a rotation of the rotors (27, 28, 50).

5. The soil cultivation machine according to any one of the preceding claims,
**characterised in that**
the cutting elements (51) are realised so as to be paddle-shaped and are aligned in the radial direction by means of a centrifugal force that is produced by a rotation of the rotors (49).

6. The soil cultivation machine according to any one of the preceding claims,
**characterised in that**
the front rotor (49) includes paddle-shaped cutting elements (51) and the rear rotor (28, 50) includes plate-shaped cutting elements (33, 52).

7. The soil cultivation machine according to any one of the preceding claims,
**characterised in that**
the cutting elements (33, 51, 52) have a distance of 0.5 cm to 5 cm, preferably of 0.5 cm to 2 cm, to the reconsolidation roll (11).

8. The soil cultivation machine according to any one of the preceding claims,
**characterised in that**
the cutting elements (33, 51, 52) are arranged in rows in the axial direction at the circumference of the rotor (27, 28, 49, 50).

9. The soil cultivation machine according to any one of the claims 1 to 7,
**characterised in that**
the cutting elements (33, 51, 52) are arranged in one row so as to be offset from each other in the axial and radial direction at the circumference of the rotor (27, 28, 51, 52).

10. The soil cultivation machine according to claim 8 or 9, **characterised in that**
per row, at least 2 to 5, preferably 6 to 12, particularly preferably 8 cutting elements (33, 51, 52) are arranged at the circumference of the rotor (27, 28, 51, 52).

11. The soil cultivation machine according to any one of the preceding claims,
**characterised in that**
the cutting element (33, 51, 52) consists of a casting material, of a fine-grained structural steel or of ceramics, said cutting element having a hardness of 350 to 550 Brinell (HB).

12. The soil cultivation machine according to any one of the preceding claims,
**characterised in that**
the cutting elements (33, 51) of the front rotor (27, 49) are at a distance to the cutting elements (33, 52) of the rear rotor (28, 50) in the direction of travel (26).

13. The soil cultivation machine according to any one of the preceding claims,
**characterised in that**
the reconsolidation roll (11) is a cage roller (42).

14. The soil cultivation machine according to claim 13, **characterised in that**
the cage roller (42) is realised from rods (44) that are arranged helically in the axial direction of the cage roller and are parallel at a distance.

15. The soil cultivation machine according to claim 13 or 14, **characterised in that**
the cage roller (42) includes an axle (43) whose axle diameter is smaller than an outer diameter of the cage roller by a factor of 0.5 to 0.8.

16. The soil cultivation machine according to any one of the preceding claims,
**characterised in that**
the soil cultivation machine (10, 48) includes a sowing device (19) for spreading seeds.

17. The soil cultivation machine according to claim 16, **characterised in that**
seed dispensing units (22) of the sowing device (19) are arranged between the reconsolidation roll (11) and the rear rotor (28, 50) and/or above the reconsolidation roll.

18. The soil cultivation machine according to any one of the preceding claims,
**characterised in that**
fastening units (13) for fastening the soil cultivation machine (10, 24, 48) to a tractor are realised at the support frame (12, 59), the drive device (14) being able to be coupled to the tractor via a drive shaft of the tractor.

19. The soil cultivation machine according to any one of the preceding claims,
**characterised in that**
the drive device (14) includes a power limitation unit by means of which a torque that can be transmitted to the rotors (27, 28, 49, 50) and/or a number of revolutions can be limited.

20. The soil cultivation machine according to any one of the preceding claims,
**characterised in that**
the rotors (27, 28, 49, 50) can be rotated by means of the drive device (14) with a number of revolutions of 800 to 1200 min⁻¹, preferably of 1000 min⁻¹.

21. The soil cultivation machine according to any one of the preceding claims,
**characterised in that**
a rotor cover (39, 60) is realised at the support frame (12, 59), said rotor cover including one baffle plate, for guiding soil parts (38), each in a front and/or rear corner, in the direction of travel (26), of an interior space (46, 61).

22. A method for soil cultivation, in particular for treating grubbing damage caused to soils by animals, with the help of a soil cultivation machine (10, 24, 48), said soil cultivation machine comprising a support frame (12, 59) having two horizontal rotors (27, 28, 49, 50) that are arranged at said support frame at right angles to a direction of travel (26) and having a reconsolidation roll (11) that is arranged at right angles to the direction of travel and that is mounted so as to be rotatable, and said soil cultivation machine comprising a drive device (14), said rotors being coupled to the drive device and being driven in such a way that a front rotor (27, 49), in the direction of travel, rotates in the direction of travel and a rear rotor (28, 50), in the direction of travel, rotates against the direction of travel, **characterised in that**
cutting elements (33, 51, 52) for engagement with a soil (36) that are mounted so as to be pivotable in the direction of travel are arranged at the rotors, soil parts (38) that adhere to the reconsolidation roll being removed by the cutting elements of the rear rotor.

## Revendications

1. Machine pour le travail du sol (10, 24, 48), en particulier pour le traitement de dégâts causés aux sols par les animaux, ladite machine pour le travail du sol comprenant un cadre porteur (12, 59) ayant deux rotors (27, 28, 49, 50) horizontaux qui sont disposés sur ce dernier transversalement à un sens de la marche (26) et ayant un rouleau de reconsolidation (11) qui est disposé transversalement au sens de la marche et monté de façon à pouvoir pivoter aussi bien que comprenant un dispositif d'entraînement (14), lesdits rotors étant couplés au dispositif d'entraînement et pouvant être entraînés de sorte qu'un rotor frontal (27, 49), dans la direction du sens de la marche, tourne dans le sens de la marche et qu'un rotor arrière (28, 50), dans le sens de la marche, tourne dans le sens inverse à ce sens de la marche,
**caractérisée en ce que**
des éléments à couper (33, 51, 52) pour pénétrer dans un sol (36) qui sont montés de façon pivotante dans le sens de la marche sont disposés aux rotors, ledit rotor arrière étant disposé en parallèle par rapport au rouleau de reconsolidation et si proche du rouleau de reconsolidation que des parties du sol (38) qui adhèrent au rouleau de reconsolidation sont écartées par les éléments à couper.

2. Machine pour le travail du sol selon la revendication 1, **caractérisée en ce que**
les éléments à couper (33, 51, 52) sont montés au rotor (27, 28, 49, 50) indépendamment les uns des autres.

3. Machine pour le travail du sol selon la revendication 1 ou 2, **caractérisée en ce que**
l'élément à couper (33, 51, 52) est fixé au rotor (27, 28, 49, 50) de façon pivotante autour d'un axe (34, 53, 56) dans une plage allant jusqu'à 180°.

4. Machine pour le travail du sol selon l'une quelconque des revendications précédentes,
**caractérisée en ce que**
les éléments à couper (33, 52) sont réalisés en forme de plaque et sont alignés dans la direction radiale par une force centrifuge qui est produite par une rotation des rotors (27, 28, 50).

5. Machine pour le travail du sol selon l'une quelconque des revendications précédentes,
**caractérisée en ce que**
les éléments à couper (51) sont réalisés en forme d'aube et sont alignés dans la direction radiale par une force centrifuge produite par une rotation des rotors (49).

6. Machine pour le travail du sol selon l'une quelconque des revendications précédentes,
**caractérisée en ce que**
le rotor frontal (49) comporte des éléments à couper (51) en forme d'aube et le rotor arrière (28, 50) comporte des éléments à couper (33, 52) en forme de plaque.

7. Machine pour le travail du sol selon l'une quelconque des revendications précédentes,
**caractérisée en ce que**
les éléments à couper (33, 51, 52) sont disposés à distance du rouleau de reconsolidation (11) de 0,5 cm à 5 cm, de préférence de 0,5 cm à 2 cm.

8. Machine pour le travail du sol selon l'une quelconque des revendications précédentes,
**caractérisée en ce que**
les éléments à couper (33, 51, 52) sont disposés à la circonférence du rotor (27, 28, 49, 50) en rangées dans la direction axiale.

9. Machine pour le travail du sol selon l'une quelconque des revendications 1 à 7,
**caractérisée en ce que**
les éléments à couper (33, 51, 52) sont disposés à la circonférence du rotor (27, 28, 51, 52) dans une rangée en décalé dans la direction axiale et radiale.

10. Machine pour le travail du sol selon la revendication 8 ou 9, **caractérisée en ce que**
par rangée, au moins 2 à 5, de préférence 6 à 12, mieux encore 8, éléments à couper (33, 51, 52) sont disposés à la circonférence du rotor (27, 28, 51, 52).

11. Machine pour le travail du sol selon l'une quelconque des revendications précédentes,
**caractérisée en ce que**
l'élément à couper (33, 51, 52) consiste en un matériau de fonderie, un acier de construction à grain fin ou en céramique, ledit élément à couper comportant une dureté de 350 à 550 Brinell (HB).

12. Machine pour le travail du sol selon l'une quelconque des revendications précédentes,
**caractérisée en ce que**
les éléments à couper (33, 51) du rotor frontal (27, 49) sont disposés à distance des éléments à couper (33, 52) du rotor arrière (28, 50) dans le sens de la marche (26).

13. Machine pour le travail du sol selon l'une quelconque des revendications précédentes,
**caractérisée en ce que**
le rouleau de reconsolidation (11) est un rouleau à barres (42).

14. Machine pour le travail du sol selon la revendication 13, **caractérisée en ce que**
le rouleau à barres (42) est réalisé à partir de barres (44) qui sont disposées en spirale dans la direction axiale du rouleau à barres et disposées à distance en parallèle.

15. Machine pour le travail du sol selon la revendication 13 ou 14, **caractérisée en ce que**
le rouleau à barres (42) comporte un axe (43) dont le diamètre d'axe est inférieur à un diamètre extérieur du rouleau à barres d'un facteur 0,5 à 0,8.

16. Machine pour le travail du sol selon l'une quelconque des revendications précédentes,
**caractérisée en ce que**
la machine pour le travail du sol (10, 48) comporte un dispositif à semer (19) pour l'épandage des semences.

17. Machine pour le travail du sol selon la revendication 16, **caractérisée en ce que**
des unités de distribution de semences (22) du dispositif à semer (19) sont disposées entre le rouleau de reconsolidation (11) et le rotor arrière (28, 50) et/ou au-dessus du rouleau de reconsolidation.

18. Machine pour le travail du sol selon l'une quelconque des revendications précédentes,
**caractérisée en ce que**
des unités de fixation (13) pour fixer la machine pour le travail du sol (10, 24, 48) à un tracteur sont réalisées au cadre porteur (12, 59), le dispositif d'entraînement (14) pouvant être couplé au tracteur par voie d'un arbre d'entraînement du tracteur.

19. Machine pour le travail du sol selon l'une quelconque des revendications précédentes,
**caractérisée en ce que**
le dispositif d'entraînement (14) comporte une unité de limitation de puissance, au moyen de laquelle un couple qui peut être transmis sur les rotors (27, 28, 49, 50) et/ou une fréquence de rotation peut être limité.

20. Machine pour le travail du sol selon l'une quelconque des revendications précédentes,
**caractérisée en ce que**
les rotors (27, 28, 49, 50) peuvent être pivotés, au moyen du dispositif d'entraînement (14), avec une fréquence de rotation de 800 à 1200 min⁻¹, de préférence 1000 min⁻¹.

21. Machine pour le travail du sol selon l'une quelconque des revendications précédentes,
**caractérisée en ce qu'**
un capot de rotor (39, 60) est réalisé au cadre porteur (12, 59), ledit capot de rotor comportant, dans un coin frontal et/ou arrière, dans le sens de la marche (26), d'un intérieur (46, 61), un déflecteur respectivement pour guider des parties du sol (38).

22. Procédé pour le travail du sol, en particulier pour le traitement de dégâts causés aux sols par les animaux, à l'aide d'une machine pour le travail du sol (10, 24, 48), ladite machine pour le travail du sol comprenant un cadre porteur (12, 59) ayant deux rotors (27, 28, 49, 50) horizontaux qui sont disposés sur ce dernier transversalement à un sens de la marche (26) et ayant un rouleau de reconsolidation (11) qui est disposé transversalement au sens de la marche et monté de façon à pouvoir pivoter aussi bien que comprenant un dispositif d'entraînement (14), lesdits rotors étant couplés au dispositif d'entraînement et étant entraînés de sorte qu'un rotor frontal (27, 49), dans la direction du sens de la marche, tourne dans le sens de la marche et qu'un rotor arrière (28, 50), dans le sens de la marche, tourne dans le sens inverse à ce sens de la marche, **caractérisé en ce que**
des éléments à couper (33, 51, 52) pour pénétrer dans un sol (36) qui sont montés de façon pivotante dans le sens de la marche sont disposés aux rotors, des parties du sol (38) qui adhèrent au rouleau de reconsolidation étant écartées par les éléments à couper du rotor arrière.
